# EUROPEAN PATENT APPLICATION

(11) **EP 4 471 288 A1**
(43) Date of publication of application: **04.12.2024**
(21) Application number: 22922343.3
(22) Date of filing: 24.11.2022
(51) Int. Cl.: F16H 19/04, F16H 55/10, F16H 55/17, F16H 57/00

(54) **POWER TRANSMISSION APPARATUS AND MANUFACTURING METHOD THEREFOR**

(30) Priority: 24.01.2022 KR 20220009932
(71) Applicant: IGB CO., LTD., Asan-si Chungcheongnam-do 31550 (KR)
(72) Inventor: LIM, Sun Ho, Asan-si Chungcheongnam-do 31533 (KR); LEE, Hyun Kyu, Asan-si Chungcheongnam-do 31481 (KR)
(74) Representative: Patentanwälte Hemmer Lindfeld Frese Partnerschaft mbB
(86) International application number: PCT/KR2022/018692
(87) International publication number: WO 2023/140485

(57) **Abstract**

A power transmission apparatus and a manufacturing method thereof are disclosed. A power transmission apparatus according to an embodiment of the inventive concept includes: a circular rack to which a motor generating power is connected to form an input shaft; a pair of upper pinions gear-engaged with both sides of the circular rack, configured to adjust an assembly distance from the circular rack through a predetermined pinion assembly distance adjuster, and decelerating power received from the circular rack by a reduction ratio of a built-in deceleration structure and transferring decelerated power; a pair of lower pinions respectively one-to-one connected to the pair of upper pinions, and decelerating the power received from the upper pinion by a reduction ratio of a built-in deceleration structure and transferring decelerated power; and a rack/pinion fixing plate to which the circular rack is fixed and to which the pair of upper pinions and the pair of lower pinions are assembled to be movable and fixed.

## Description

### TECHNICAL FIELD

The present inventive concept relates to a power transmission apparatus and a manufacturing method thereof, and more particularly, to a power transmission apparatus having a structure in which a circular rack and a pair of upper pinions are assembled and fixed, by location, to a rack/pinion fixing plate based on an absolute assembly distance between the circular rack and the pair of upper pinions, and a manufacturing method thereof, whereby assembly convenience and reliability of the apparatus may be improved and maintenance and repair work may also become much easier than the related art.

### BACKGROUND ART

Power transmission apparatuses transmit power to a target object by converting a rotational motion into a linear motion or a linear motion into a rotational motion. Here, the target object may refer to a moving device, for example, an index, a bogie, and the like, applied to various industrial equipment including semiconductor equipment, flat display equipment, such as LCD, PDP, and OLED, and the like.

In this state, as a power transmission apparatus for converting a rotational motion into a linear motion or a linear motion into a rotational motion may be implemented by a combination of various components, the power transmission apparatus may have various structures as well.

Among power transmission apparatuses having various structures, for example, a power transmission apparatus may be considered, which is manufactured in the form of a single assembly by connecting a pair of upper pinions to a pair of lower pinions respectively corresponding thereto, for assembly, and then connecting a circular rack, as an input shaft, between the pair of upper pinions.

As such a power transmission apparatus may have a compact structure in which a circular rack, a pair of upper pinions, a pair of lower pinions, and various parts attached thereto are assembled, by location, to a rack/pinion fixing plate, it is expected that the power transmission apparatus may be usefully applied to precision transfer devices or moving devices in various industrial equipment including semiconductor equipment, flat display equipment such as LCD, PDP, and OLED, and the like.

Accordingly, although it is expected that a research on this type of a power transmission apparatus is necessary, when a circular rack and a pair of upper pinions are assembled to a rack/pinion fixing plate, an assembly distance therebetween should be precisely controlled and such a work is not substantially easy.

Although it may be considered to perform an assembly work after measuring an assembly distance between a circular rack and a pair of upper pinions by using various measuring instruments, such as micrometers that are available on the market and the like, such a method merely enables an assembly work based on the measurement of only a relative assembly distance between the circular rack and the pair of upper pinions, and it is unable to know the absolute assembly distance between the circular rack and the pair of upper pinions. Thus, whenever a measuring instrument is changed, a problem of newly setting the original setting of measuring instrument may occur.

Considering that such a problem may finally cause disruption in mass production of a product that is a power transmission apparatus and further in maintenance and repair thereof, there is a demand for a new concept of a power transmission apparatus in which an absolute assembly distance between a circular rack and a pair of upper pinions is easily and effectively measured so as to be easily applied to the assembly and the maintenance and repair of the apparatus.

### DETAILED DESCRIPTION OF THE INVENTIVE CONCEPT

### TECHNICAL PROBLEM

Provided is a power transmission apparatus having a structure in which a circular rack and a pair of upper pinions are assembled and fixed, by location, to a rack/pinion fixing plate based on an absolute assembly distance between the circular rack and the pair of upper pinions, and thus, assembly convenience and reliability of the apparatus may be improved and maintenance and repair work may also become much easier than the related art, and a manufacturing method thereof.

### ADVANTAGEOUS EFFECTS

According to the present inventive concept, due to a structure in which a circular rack and a pair of upper pinions are assembled and fixed, by location, to a rack/pinion fixing plate based on an absolute assembly distance between the circular rack and the pair of upper pinions, assembly convenience and reliability of the apparatus may be improved and maintenance and repair work may also become much easier than the related art.

### DESCRIPTION OF THE DRAWINGS

FIG. 1 is a perspective view of a power transmission apparatus according to an embodiment of the present inventive concept.
FIG. 2 is a view showing a state of a pinion assembly distance adjuster being assembled to one side of the power transmission apparatus of FIG. 1.
FIG. 3 is a view showing a use state of the power transmission apparatus of FIG. 1 being connected to a linear rack.
FIG. 4 is a perspective view of a pinion assembly distance adjuster.
FIGS. 5 to 7 are views showing FIG. 4 at different angles.
FIG. 8 is a partially cut-away view of a power transmission apparatus according to an embodiment of the present inventive concept with pinion assembly distance adjusters being assembled to both sides thereof.
FIG. 9 is a partially cross-sectional structural view of FIG. 8.
FIG. 10 is a view showing a position of an assembly distance and the like marked in FIG. 9.
FIG. 11 is a partial flat structural view of FIG. 9.
FIG. 12 is a plan cross-sectional structural view of major portions of FIG. 11.
FIG. 13 is an enlarged view of major portions of FIG. 12.
FIG. 14 is a bottom perspective view of FIG. 2.
FIG. 15 is an enlarged view of a region E of FIG. 14.
FIG. 16 is a bottom perspective view of a rack/pinion fixing plate.
FIG. 17 is an assembly view of an upper pinion and a lower pinion.
FIG. 18 is an enlarged view of an upper pinion and a lower pinion.
FIG. 19 is a view showing an origin setting process for a pinion assembly distance adjuster.
FIG. 20 is a flowchart of a method of manufacturing a power transmission apparatus according to an embodiment of the present inventive concept.

### BEST MODE

According to an aspect of the present inventive concept, a power transmission apparatus includes: a circular rack to which a motor generating power is connected to form an input shaft; a pair of upper pinions gear-engaged with both sides of the circular rack, configured to adjust an assembly distance from the circular rack through a predetermined pinion assembly distance adjuster, and decelerating power received from the circular rack by a reduction ratio of a built-in deceleration structure and transferring decelerated power; a pair of lower pinions respectively one-to-one connected to the pair of upper pinions, and decelerating the power received from the upper pinion by a reduction ratio of a built-in deceleration structure and transferring decelerated power; and a rack/pinion fixing plate to which the circular rack is fixed and to which the pair of upper pinions and the pair of lower pinions are assembled to be movable and fixed.

The power transmission apparatus may further include a mechalock aligning concentricity of the upper pinion and the lower pinion and fixing the upper pinion and the lower pinion.

The power transmission apparatus may further include a pinion transfer plate coupled between the upper pinion and the lower pinion coupled to each other by the mechalock forming one body, and transferring the upper pinion and the lower pinion on the rack/pinion fixing plate.

A guide rail for position movements of the upper pinion and the lower pinion connected to each other and forming one body may be formed in any one of the pinion transfer plate and the rack/pinion fixing plate, and a rail block moving on the guide rail may be formed on the other one thereof.

The guide rail may be provided in a groove form in the rack/pinion fixing plate, and the rail block may be provided in a protrusion form on the pinion transfer plate.

A circular rack assembly hole for assembly of the circular rack may be formed in a central area of the rack/pinion fixing plate, and a pair of pinion assembly holes for assembly of the upper pinion and the lower pinion may be formed in both sides of the circular rack assembly hole, and the guide rail may be formed in the rack/pinion fixing plate to communicate with the circular rack assembly hole and the pinion assembly holes.

While fixed at a regular position on the rack/pinion fixing plate, the pinion assembly distance adjuster may measure an absolute assembly distance between the circular rack and the upper pinion.

The pinion assembly distance adjuster may include: a first fixing block fixed to one side of the rack/pinion fixing plate; an origin fixing dowel pin having one side connected to the first fixing block and the other side coupled to a predetermined position on the rack/pinion fixing plate; a second fixing block separated from the first fixing block and fixed to the one side of the rack/pinion fixing plate; a pressing block pressing the upper pinion toward the circular rack; a support block connected to the first fixing block and the second fixing block and supporting the pressing block to be movable; a pressure adjusting screw connected to the second fixing block, having an end portion connected to the pressing block, and pressing the pressing block; and a dial gauge connected to the support block and measuring an absolute assembly distance between the circular rack and the upper pinion.

The upper pinion and the lower pinion may each be a pin-geared pinion to which a plurality of pins are coupled to be rotatable in a circumferential direction of an outer circumferential surface, and the size of the lower pinion is greater than the size of the upper pinion, and a plurality of pin grooves supporting some of the plurality of pins provided in the upper pinion may be formed in an end portion of the pressing block.

A dowel pin coupling portion to which the origin fixing dowel pin of the pinion assembly distance adjuster may be formed in the rack/pinion fixing plate.

The power transmission apparatus may further include a motor mounting plate coupled to the rack/pinion fixing plate and forming a place where the motor is mounted while aligning concentricity of a shaft of the motor and the input shaft of the circular rack.

The power transmission apparatus may further include a concentric alignment dowel pin connected to the motor mounting plate and the rack/pinion fixing plate and aligning concentricity of the motor mounting plate and input shaft of the circular rack.

According to another aspect of the present inventive concept, a method of manufacturing a power transmission apparatus includes: a pinion assembly distance adjuster origin setting operation of performing origin setting on a pinion assembly distance adjuster by using an origin setting jig; a pinion assembly distance adjuster assembly operation of assembly the pinion assembly distance adjuster to a rack/pinion fixing plate to which a circular rack, a pair of upper pinions, and a pair of lower pinions are assembled to be movable; and a circular rack and upper pinion absolute assembly distance measurement operation of measuring an absolute assembly distance between the circular rack and the pair of upper pinions by using the pinion assembly distance adjuster.

The method may further include a power transmission apparatus assembly completion operation of completing assembly of the power transmission apparatus by assembling and fixing the circular rack, the pair of upper pinions and the pair of lower pinions to the rack/pinion fixing plate based on the absolute assembly distance between the circular rack and the pair of upper pinions that is measured and obtained, and by assembling the other parts thereto.

While fixed at a regular position on the rack/pinion fixing plate, the pinion assembly distance adjuster may measure the absolute assembly distance between the circular rack and the upper pinion.

The pinion assembly distance adjuster may include at least one origin fixing dowel pin that is coupled to a dowel pin coupling portion formed on the rack/pinion fixing plate, and the pinion assembly distance adjuster assembly operation may be performed while the origin fixing dowel pin of the pinion assembly distance adjuster is coupled to the dowel pin coupling portion of the rack/pinion fixing plate.

To perform the power transmission apparatus assembly completion operation, a guide rail for position movements of the upper pinion and the lower pinion connected to each other and forming one body may be formed in any one of a pinion transfer plate and the rack/pinion fixing plate, the pinion transfer plate being coupled between the upper pinion and the lower pinion that are coupled to each other and form one body, and a rail block moving on the guide rail may be formed on the other one thereof

The guide rail may be provided in a groove form in the rack/pinion fixing plate, and the rail block may be provided in a protrusion form on the pinion transfer plate.

A circular rack assembly hole for assembly of the circular rack may be formed in a central area of the rack/pinion fixing plate, and a pair of pinion assembly holes for assembly of the upper pinion and the lower pinion may be formed in both sides of the circular rack assembly hole, and the guide rail may be formed in the rack/pinion fixing plate to communicate with the circular rack assembly hole and the pinion assembly holes.

### MODE OF THE INVENTIVE CONCEPT

The attached drawings for illustrating preferred embodiments of the present inventive concept are referred to in order to gain a sufficient understanding of the present inventive concept, the merits thereof, and the objectives accomplished by the implementation of the present inventive concept.

Hereinafter, the present inventive concept will be described in detail by explaining preferred embodiments of the inventive concept with reference to the attached drawings. Like reference numerals in the drawings denote like elements.

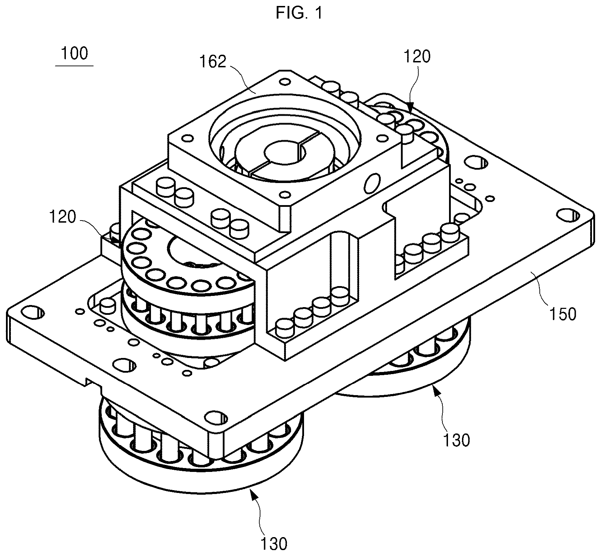

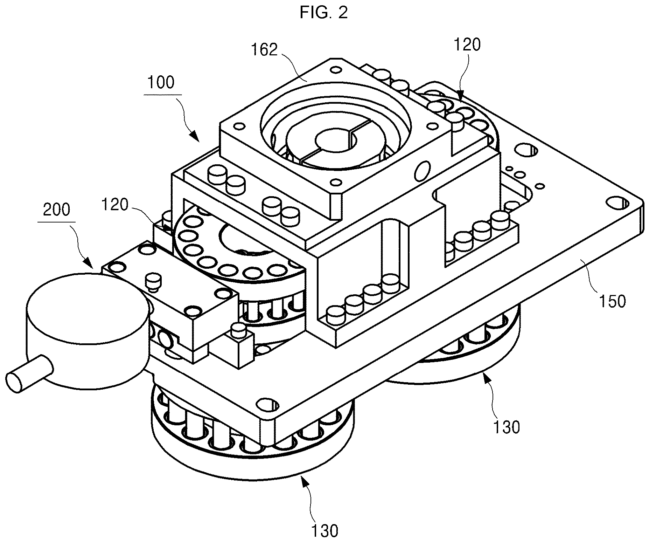

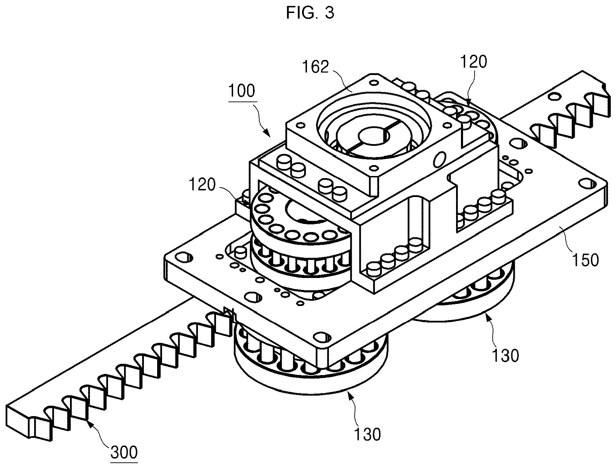

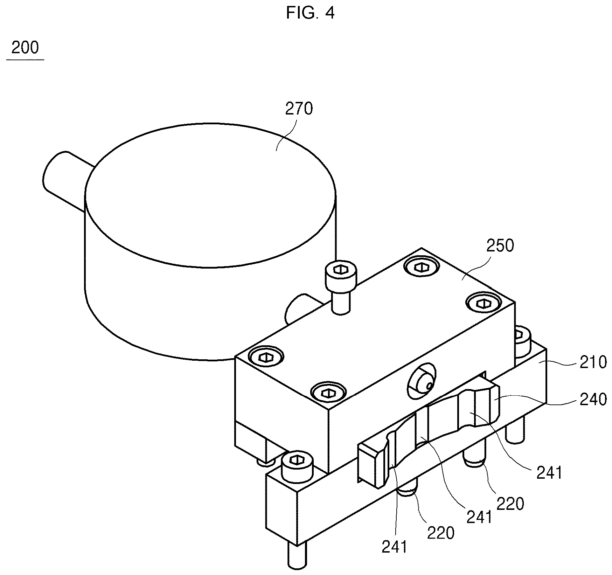

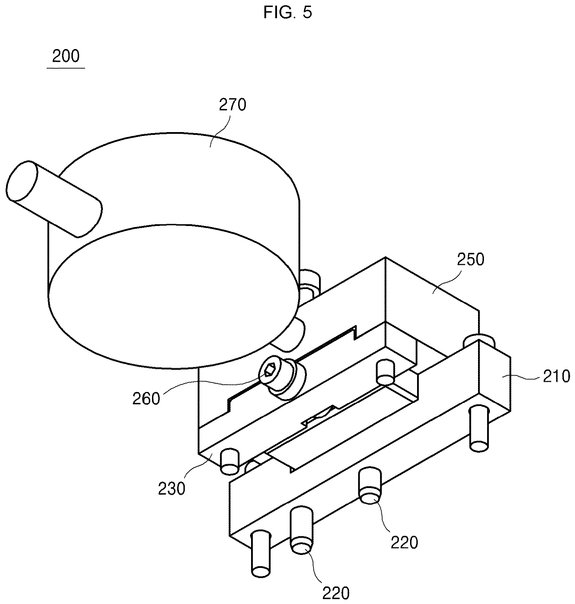

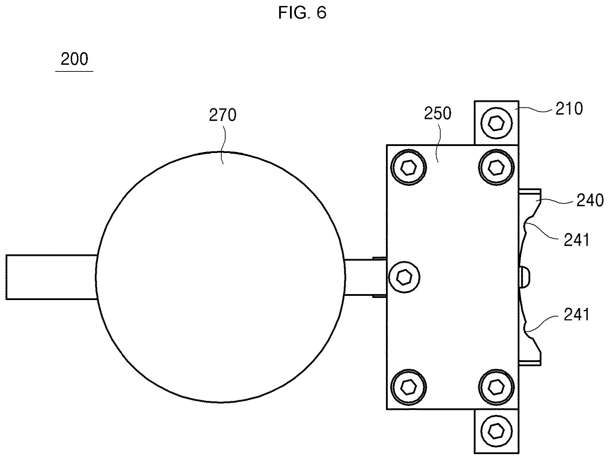

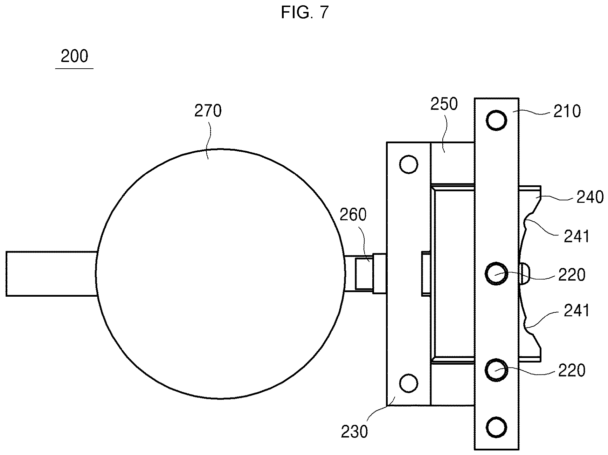

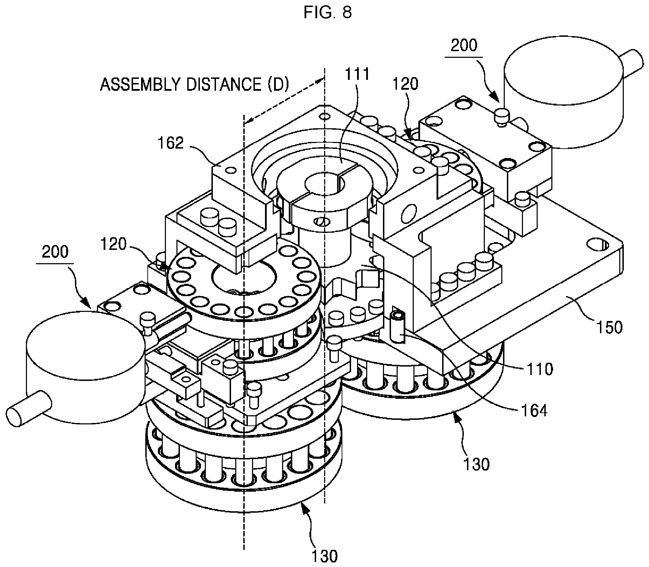

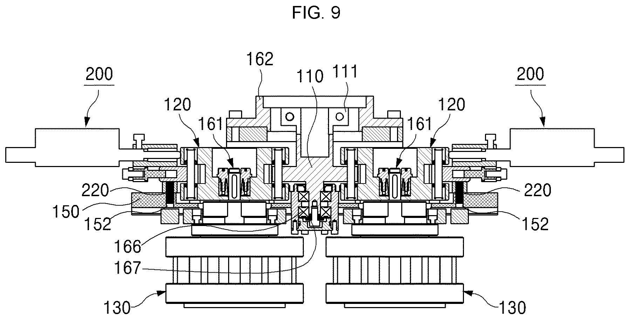

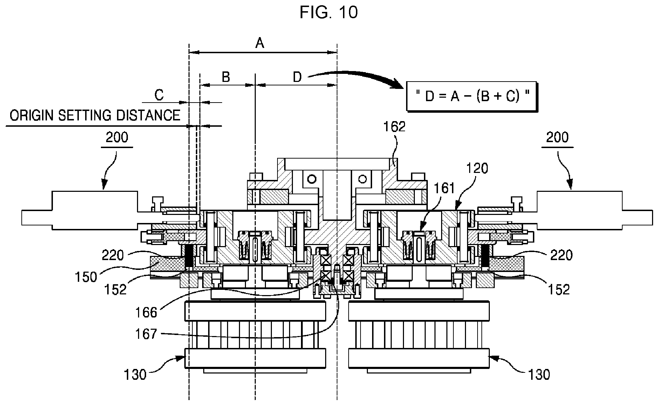

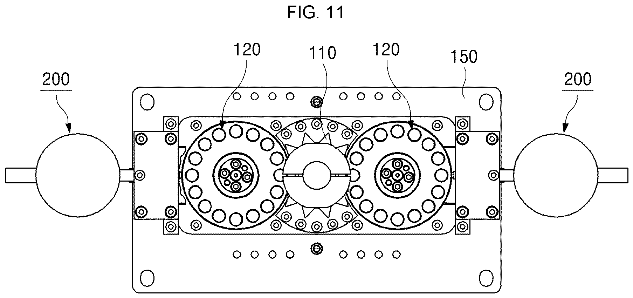

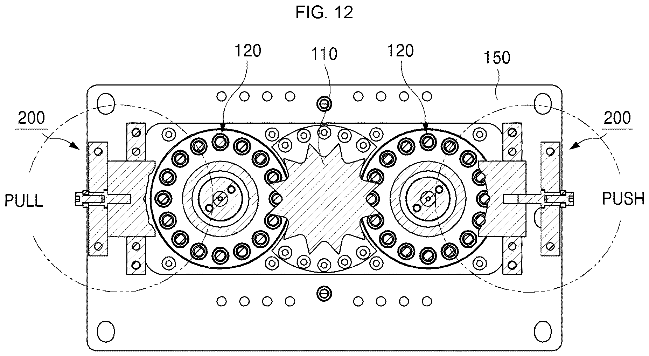

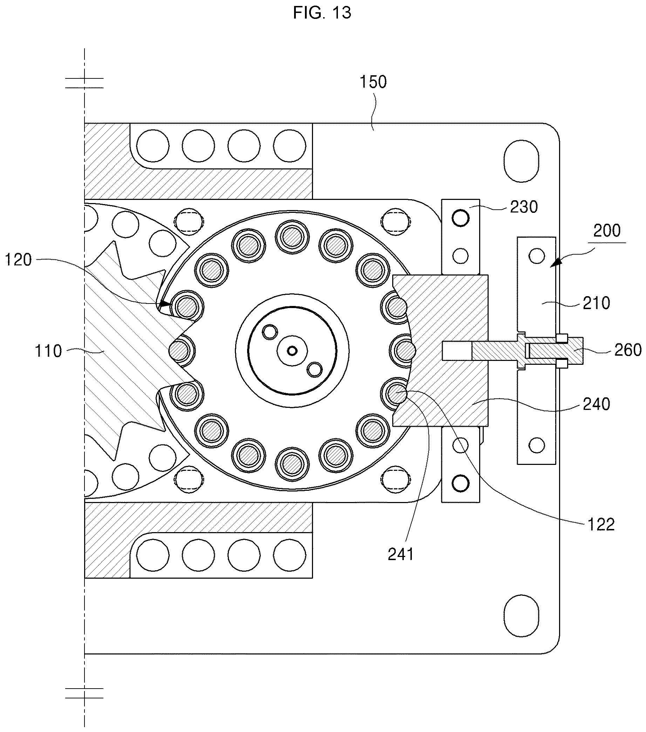

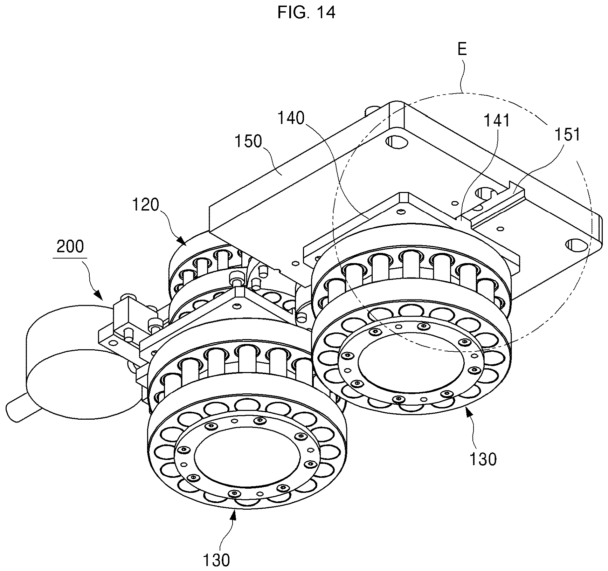

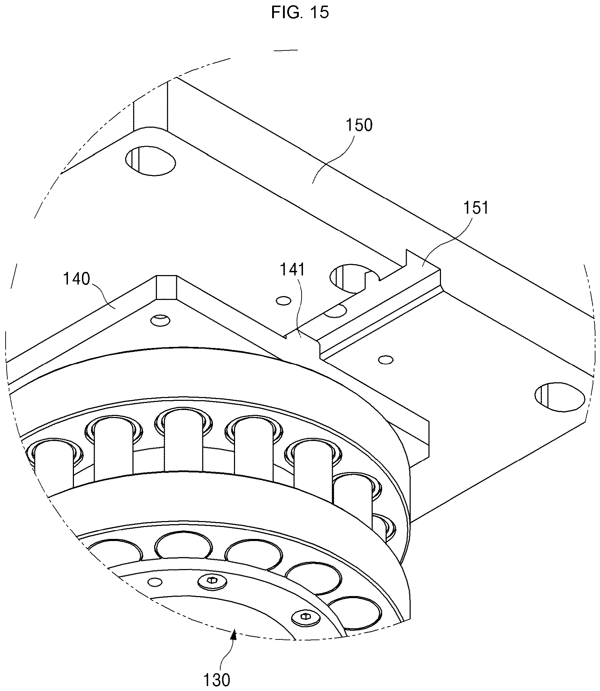

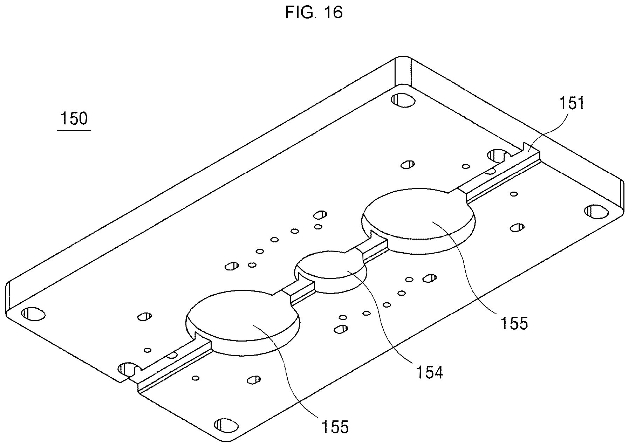

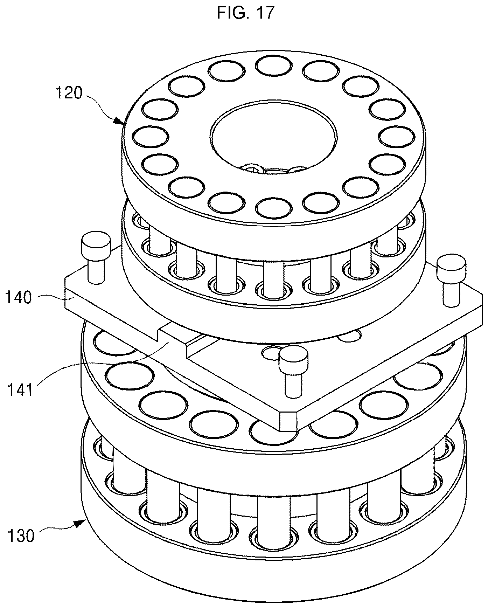

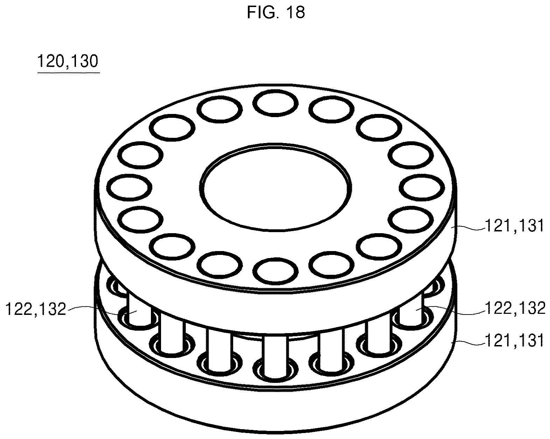

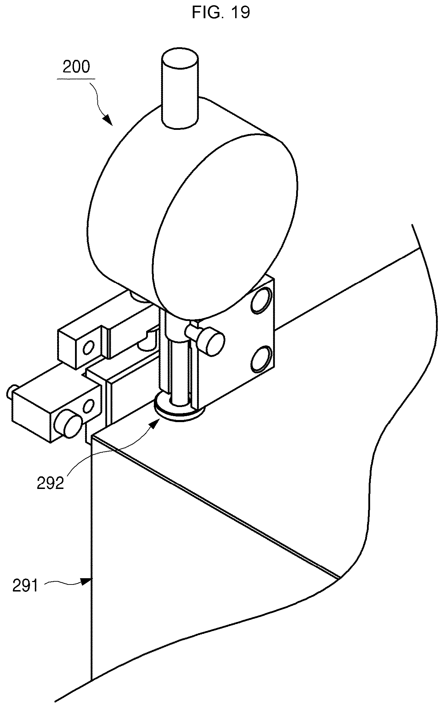

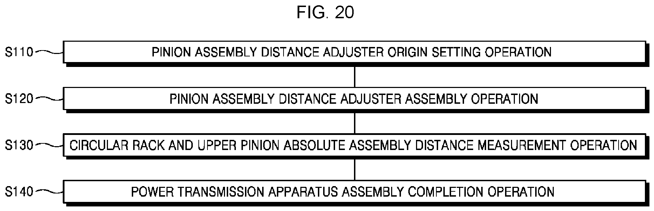

FIG. 1 is a perspective view of a power transmission apparatus according to an embodiment of the present inventive concept, FIG. 2 is a view showing a state of a pinion assembly distance adjuster being assembled to one side of the power transmission apparatus of FIG. 1, FIG. 3 is a view showing a use state of the power transmission apparatus of FIG. 1 being connected to a linear rack, FIG. 4 is a perspective view of a pinion assembly distance adjuster, FIGS. 5 to 7 are views showing FIG. 4 at different angles, FIG. 8 is a partially cut-away view of a power transmission apparatus according to an embodiment of the present inventive concept with pinion assembly distance adjusters being assembled to both sides thereof, FIG. 9 is a partially cross-sectional structural view of FIG. 8, FIG. 10 is a view showing a position of an assembly distance and the like marked in FIG. 9, FIG. 11 is a partial flat structural view of FIG. 9, FIG. 12 is a plan cross-sectional structural view of major portions of FIG. 11, FIG. 13 is an enlarged view of major portions of FIG. 12, FIG. 14 is a bottom perspective view of FIG. 2, FIG. 15 is an enlarged view of a region E of FIG. 14, FIG. 16 is a bottom perspective view of a rack/pinion fixing plate, FIG. 17 is an assembly view of an upper pinion and a lower pinion, FIG. 18 is an enlarged view of an upper pinion and a lower pinion, FIG. 19 is a view showing an origin setting process for an pinion assembly distance adjuster, and FIG. 20 is a flowchart of a method of manufacturing a power transmission apparatus according to an embodiment of the present inventive concept.

Referring to these drawings, a power transmission apparatus 100 according to the present embodiment has a structure in which a circular rack 110 and a pair of upper pinions 120 are assembled and fixed, by location, to a rack/pinion fixing plate 150 based on an absolute assembly distance D (see FIG. 10) between a circular rack 110 and a pair of upper pinions 120, and thus, assembly convenience and reliability of the apparatus may be improved and maintenance and repair work may also become much easier than the related art.

In other words, the power transmission apparatus 100 according to the present embodiment may be manufactured (assembled) into the form of FIG. 1 by a method of FIG. 20. Although described below in detail, the power transmission apparatus 100 according to the present embodiment may form a compact structure in which the circular rack 110, the pair of upper pinions 120, a pair of lower pinions 130, and various parts attached thereto are assembled, by location, to the rack/pinion fixing plate 150, so as to be expected to be usefully applied to precision transfer devices or moving devices in various industrial equipment including semiconductor equipment, flat display equipment, such as LCD, PDP, or OLED, and the like.

Meanwhile, the power transmission apparatus 100 of the present embodiment may be connected to, for example, a linear rack 300, as in FIG. 3, to be employed as one equipment. In this case, the power transmission apparatus 100 according to the present embodiment may be moved in a longitudinal direction of the linear rack 300, or the linear rack 300 may perform a linear motion.

Unlike the drawing, instead of the linear rack 300, a curved rack (not shown), for example, an arc type or circular curved rack (available for both of inscription and circumscription) may be employed, and these items are all included in the scope of the present inventive concept.

The power transmission apparatus 100 according to the present embodiment capable of providing such an effect may form the compact structure, as described above, in which the circular rack 110, the pair of upper pinions 120, the pair of lower pinions 130, and various parts attached thereto are assembled, by location, to the rack/pinion fixing plate 150.

Detailed configuration and structure forming the power transmission apparatus 100 are described. First, the circular rack 110, to which a motor (not shown) for generating power in the present embodiment is connected, forms an input shaft.

In detail, a motor shaft coupling portion 111 is connected to a center area of the circular rack 110. Accordingly, as a motor shaft of the motor (not shown) mounted on a motor mounting plate 162 is connected to the motor shaft coupling portion 111 (see FIG. 8) connected to the circular rack 110, the circular rack 110 may form an input shaft. In other words, when the motor that is not shown operates, the circular rack 110 is first rotated by the operation of the motor, and then, the power is sequentially transmitted to the upper pinion 120 and the lower pinion 130.

The motor mounting plate 162 that is a structure that supports the motor as described above is assembled to the vicinity of the circular rack 110, that is, the rack/pinion fixing plate 150.

The motor mounting plate 162 is coupled to the rack/pinion fixing plate 150 and forms a place where the motor is mounted while aligning concentricity of the shaft of the motor and the input shaft of the circular rack 110.

A concentricity alignment dowel pin 164 (see FIG. 8) that aligns concentricity of the motor mounting plate 162 and the input shaft of the circular rack 110 is coupled to the motor mounting plate 162 and the rack/pinion fixing plate 150. The concentricity alignment dowel pin 164 may include a plurality of concentricity alignment dowel pins.

A ball bearing 166 (see FIG. 9) is coupled to the circular rack 110. The ball bearing 166 enables a smooth rotation of the circular rack 110 forming the input shaft and also prevents fine shaking. In order to apply a pre-load to the ball bearing 166, a pre-load plate 167 (see FIG. 9) is connected to the ball bearing 166.

The upper pinion 120 includes a pair of upper pinions to be gear-engaged in both sides of the circular rack 110, and is provided such that the assembly distance D from the circular rack 110 is adjusted through a certain pinion assembly distance adjuster 200.

The upper pinion 120 receives the power from the circular rack 110 forming the input shaft, decelerates the power by a reduction ratio of a built-in deceleration structure, and transmits the decelerated power to the lower pinion 130.

The lower pinion 130 is connected, one by one, to each of the pair of upper pinions 120. Accordingly, the lower pinion 130 also includes a pair of lower pinions.

The lower pinion 130 receives the power from the upper pinion 120, decelerates the power by a reduction ratio of a built-in deceleration structure, and transmits the decelerated power. For example, in the case of FIG. 3, the power is transmitted to the linear rack 300. Accordingly, the power transmission apparatus 100 according to the present embodiment may move in the longitudinal direction of the linear rack 300 of FIG. 3.

For reference, the upper pinion 120 and the lower pinion 130 applied to the present embodiment are pin-geared pinions 120 and 130 to which a plurality of pins 122 and 132 are coupled to be rotatable in a circumferential direction of an outer circumferential surface, and the size of the lower pinion 130 is greater than the size of the upper pinion 120. Such a size difference may be changed as necessary, and thus, the scope of the present inventive concept is not limited to the shape in the drawings.

In other words, as illustrated in FIG. 18, a so-called pin gear (pin gear) to which the plurality of pins 122 and132 are applied may be applied to both of the upper pinion 120 and the lower pinion 130 in the present embodiment.

The upper pinion 120 and the lower pinion 130 may both include a plurality of pins 122 and 132 and housings 121 and 131 that rotatably support the plurality of pins 122 and 132.

Although the structures of the housings 121 and 131 are not illustrated in detail, a deceleration device (not shown) for decelerating an input speed input to the upper pinion 120 and to the lower pinion 130 is mounted in each of the housings 121 and 131. Such a deceleration structure is referred to in documents filed by the present applicant and then registered, and is omitted herein.

The upper pinion 120 and the lower pinion 130 are connected to each other forming one body. To this end, employed is a mechalock 161 (see FIG. 9) for fixing the upper pinion 120 and the lower pinion 130 while aligning concentricity of the upper pinion 120 and the lower pinion 130.

A pinion transfer plate 140 for transferring the upper pinion 120 and the lower pinion 130 on the rack/pinion fixing plate 150 is provided between the upper pinion 120 and the lower pinion 130 that are connected to each other by the mechalock 161 and form one body.

As a result, as illustrated in FIG. 17, the upper pinion 120 and the lower pinion 130 are connected by the mechalock 161, form an integrated one body with the pinion transfer plate 140 therebetween, and are assembled in an area of a pinion assembly hole 155 of the rack/pinion fixing plate 150.

The rack/pinion fixing plate 150 forms a place in which, while the circular rack 110 is fixed, the pair of upper pinions 120 and the pair of lower pinions 130 are assembled to be movable and fixed.

The rack/pinion fixing plate 150 has a plate structure having a certain thickness, a circular rack assembly hole 154 for assembly of the circular rack 110 is formed in a central area thereof, and a pair of pinion assembly holes 155 for assembly of the upper pinion 120 and the lower pinion 130 are formed in both sides of the circular rack assembly hole 154.

As described above, as illustrated in FIG. 17, the upper pinion 120 and the lower pinion 130 that form one body in an assembly form may be assembled in the pair of pinion assembly holes 155. In other words, as illustrated in FIG. 17, the upper pinion 120 and the lower pinion 130 that form one body in an assembly form may be assembled, as an assembly, in the pinion assembly hole 155.

Meanwhile, as described above, as the power transmission apparatus 100 according to the present embodiment is a precision product, when the circular rack 110 and the upper pinion 120 and the lower pinion 130, both forming one body in an assembly form as illustrated in FIG. 17, are assembled to the rack/pinion fixing plate 150, that is, when the circular rack 110 and the upper pinion 120 are assembled, the assembly distance D needs to be precisely set to provide desired performance.

Accordingly, it may be considered to measure the assembly distance D (see FIG. 10) of the circular rack 110 and the pair of upper pinions 120 by using various measuring instruments, such as micrometers (not shown) that are available on the market and the like, and then perform an assembly work. However, such a method merely enables an assembly work based on the measurement of only the assembly distance D that is relative distance between the circular rack 110 and the pair of upper pinions 120, and it is unable to know the absolute assembly distance between the circular rack 110 and the pair of upper pinions 120. Thus, whenever a measuring instrument is changed, a problem of newly setting the original setting of measuring instrument may occur

As such a problem may finally cause disruption in mass production of a product that is the power transmission apparatus 100 and further in maintenance and repair thereof, in the case of the present embodiment, the following structure and method are proposed.

In the case of the present embodiment, unlike the related art, as the assembly distance D (see FIG. 10) of the circular rack 110 and the pair of upper pinions 120 is measured through the pinion assembly distance adjuster 200, and then these parts are fixed to the rack/pinion fixing plate 150, and thus, assembly convenience and reliability of the apparatus may be improved and maintenance and repair work may also become much easier than the related art.

The pinion assembly distance adjuster 200 may be assembled to one side for use, as illustrated in FIG. 2, and then assembled to the other side for use and removed, or assembled to both sides for use. In any case, the pinion assembly distance adjuster 200 is only a device used to assemble the power transmission apparatus 100 as in FIG. 1, through the method of FIG. 20, and is removed when the assembly is completed.

For application of the pinion assembly distance adjuster 200, the pinion transfer plate 140 is added to the power transmission apparatus 100 according to the present embodiment, and the structure of the rack/pinion fixing plate 150 is changed. In other words, in the present embodiment, a guide rail 151 for position movements of the upper pinion 120 and the lower pinion 130 connected to each other forming one body as illustrated in FIG. 17 is formed in any one of the pinion transfer plate 140 and the rack/pinion fixing plate 150, and a rail block 141 moving on the guide rail 151 is formed in the other thereof.

In the present embodiment, the guide rail 151 is provided in the form of a groove in the rack/pinion fixing plate 150, and the rail block 141 is provided in the form of a protrusion on the pinion transfer plate 140. In this state, the guide rail 151 may be formed in the rack/pinion fixing plate 150 to communicate with the circular rack assembly hole 154 and the pinion assembly hole 155.

However, an inverse case is possible. In other words, the guide rail 151 may be provided in the pinion transfer plate 140, and the rail block 141 may be provided on the rack/pinion fixing plate 150. Both cases are considered to belong to the scope of the present inventive concept.

Meanwhile, in the present embodiment, while fixed at a regular position on the rack/pinion fixing plate 150, as illustrated in FIGS. 2 and 8 to 14, the pinion assembly distance adjuster 200 measures the absolute assembly distance D between the circular rack 110 and the upper pinion 120.

The pinion assembly distance adjuster 200 performing the function described above may include, as illustrated in detail in FIGS. 4 to 7, a first fixing block 210 fixed to one side of the rack/pinion fixing plate 150, an origin fixing dowel pin 220 having one side connected to the first fixing block 210 and the other side coupled to a predetermined position on the rack/pinion fixing plate 150, a second fixing block 230 separated from the first fixing block 210 and fixed to one side of the rack/pinion fixing plate 150, a pressing block 240 pressing the upper pinion 120 toward the circular rack 110, a support block 250 connected to the first fixing block 210 and the second fixing block 230 and movably supporting the pressing block 240, a pressure adjusting screw 260 connected to the second fixing block 230, having one end connected to the pressing block 240, and pressing the pressing block 240, and a dial gauge 270 connected to the support block 250 and measuring the absolute assembly distance D between the circular rack 110 and the upper pinion 120. As the pinion assembly distance adjuster 200 has the structure as above, the pinion assembly distance adjuster 200 may be easily detached from and attached to the rack/pinion fixing plate 150. Accordingly, workability is very good.

A plurality of pin grooves 241 that support some of the pins 122 provided in the upper pinion 120 are formed in an end portion of the pressing block 240. In the case of the present embodiment, three pin grooves 241 are formed in the end portion of the pressing block 240. However, this can be changed at any time. In other words, the scope of the present inventive concept is not limited to such a number.

Accordingly, as the origin fixing dowel pin 220 is coupled to a dowel pin coupling portion 152 (see FIG. 9) formed on the rack/pinion fixing plate 150, the first and second fixing blocks 210 and 230 are fixed to the rack/pinion fixing plate 150. Next, while the pin grooves 241 formed in the end portion of the pressing block 240 are in contact with the pins 122 provided in the upper pinion 120, the pressure adjusting screw 260 are screwed to allow the pressing block 240 to advance so that the assembly distance D between the circular rack 110 and the pair of upper pinions 120, in particular, the absolute assembly distance D, may be measured. In particular, as the measurement value is obtained while the pinion assembly distance adjuster 200 is fixed to one side of the rack/pinion fixing plate 150, inconvenience of newly setting the original setting may be removed.

As indicated in FIG. 10, as an assembly distance A between the circular rack 110 and the pinion assembly distance adjuster 200, a radius B of the upper pinion 120, and a contact distance C between the pinion assembly distance adjuster 200 and the upper pinion 120 are measurable, the assembly distance D between the circular rack 110 and the pair of upper pinions 120, in particular, the absolute assembly distance D, may be measured by calculating these values. Accordingly, the circular rack 110 and the pair of upper pinions 120 may be assembled at accurate positions on the rack/pinion fixing plate 150 based thereon. As described above, as the upper pinion 120 forms one body with the lower pinion 130 as illustrated in FIG. 17, when the circular rack 110 and the pair of upper pinions 120 are assembled at regular positions, the assembly of the lower pinion 130 may be set with precision.

A method of manufacturing, that is, producing (assembling), the power transmission apparatus 100 having the structure described above is described.

First, as illustrated in FIG. 19, the origin setting of the pinion assembly distance adjuster 200 is performed by using an origin setting jig 292 on a surface plate 291 (S110).

Next, the pinion assembly distance adjuster 200 with the origin setting completed is assembled to the rack/pinion fixing plate 150 to which the circular rack 110, the pair of upper pinions 120, and the pair of lower pinions 130 are assembled to be movable (S120).

The pinion assembly distance adjuster 200 may be assembled to one side for use, as illustrated in FIG. 2, and then assembled to the other side for use and removed, or assembled to both sides for use. In any case, the pinion assembly distance adjuster 200 is only a device used to assemble the power transmission apparatus 100 as in FIG. 1, through the method of FIG. 20, and is removed when the assembly is completed.

Next, the absolute assembly distance D between the circular rack 110 and the pair of upper pinions 120 is measured by using the pinion assembly distance adjuster 200 (S130). The absolute assembly distance D may be obtained through the calculation of the assembly distance A between the circular rack 110 and the pinion assembly distance adjuster 200, the radius B of the upper pinion 120, and the contact distance C between the pinion assembly distance adjuster 200 and the upper pinion 120, which are given values as indicated in FIG. 10.

Then, based on the absolute assembly distance D between the circular rack 110 and the pair of upper pinions 120 that is measured and obtained, while the circular rack 110, the pair of upper pinions 120, and the pair of lower pinions 130 are assembled and fixed to the rack/pinion fixing plate 150, the other parts are assembled thereto so that the assembly of the power transmission apparatus 100 in the same form as that in FIG. 1 is completed (S140).

As the power transmission apparatus 100 according to the present embodiment having the structure and operation as described above has a structure in which the circular rack 110 and the pair of upper pinions 120 are assembled and fixed, by location, to the rack/pinion fixing plate 150 based on the absolute assembly distance D (see FIG. 10) between the circular rack 110 and the pair of upper pinions 120, assembly convenience and reliability of the apparatus may be improved and maintenance and repair work may also become much easier than the related art.

While this inventive concept has been particularly shown and described with reference to preferred embodiments thereof, it will be understood by those of ordinary skill in the art that various changes in form and details may be made therein without departing from the spirit and scope of the inventive concept as defined by the appended claims. Therefore, the scope of the inventive concept is defined not by the detailed description of the inventive concept but by the appended claims, and all differences within the scope will be construed as being included in the present inventive concept.

### INDUSTRIAL APPLICABILITY

The present inventive concept may be used for various machine tools that require a rotational motion or a linear motion, industrial machinery, semiconductor or flat display manufacturing equipment, various logistics transfer equipment, and the like.

## Claims

1. A power transmission apparatus comprising:
a circular rack to which a motor generating power is connected to form an input shaft;
a pair of upper pinions gear-engaged with both sides of the circular rack, configured to adjust an assembly distance from the circular rack through a predetermined pinion assembly distance adjuster, and decelerating power received from the circular rack by a reduction ratio of a built-in deceleration structure and transferring decelerated power;
a pair of lower pinions respectively one-to-one connected to the pair of upper pinions, and decelerating the power received from the upper pinion by a reduction ratio of a built-in deceleration structure and transferring decelerated power; and
a rack/pinion fixing plate to which the circular rack is fixed and to which the pair of upper pinions and the pair of lower pinions are assembled to be movable and fixed.

2. The power transmission apparatus of clam 1, further comprising a mechalock aligning concentricity of the upper pinion and the lower pinion and fixing the upper pinion and the lower pinion.

3. The power transmission apparatus of clam 2, further comprising a pinion transfer plate coupled between the upper pinion and the lower pinion coupled to each other by the mechalock forming one body, and transferring the upper pinion and the lower pinion on the rack/pinion fixing plate.

4. The power transmission apparatus of clam 3, wherein a guide rail for position movements of the upper pinion and the lower pinion connected to each other and forming one body is formed in any one of the pinion transfer plate and the rack/pinion fixing plate, and a rail block moving on the guide rail is formed on the other one thereof.

5. The power transmission apparatus of clam 4, wherein the guide rail is provided in a groove form in the rack/pinion fixing plate, and the rail block is provided in a protrusion form on the pinion transfer plate.

6. The power transmission apparatus of clam 5, wherein a circular rack assembly hole for assembly of the circular rack is formed in a central area of the rack/pinion fixing plate, and a pair of pinion assembly holes for assembly of the upper pinion and the lower pinion are formed in both sides of the circular rack assembly hole, and
the guide rail is formed in the rack/pinion fixing plate to communicate with the circular rack assembly hole and the pinion assembly holes.

7. The power transmission apparatus of clam 1, wherein, while fixed at a regular position on the rack/pinion fixing plate, the pinion assembly distance adjuster measures an absolute assembly distance between the circular rack and the upper pinion.

8. The power transmission apparatus of clam 1, wherein the pinion assembly distance adjuster comprises:
a first fixing block fixed to one side of the rack/pinion fixing plate;
an origin fixing dowel pin having one side connected to the first fixing block and the other side coupled to a predetermined position on the rack/pinion fixing plate;
a second fixing block separated from the first fixing block and fixed to the one side of the rack/pinion fixing plate;
a pressing block pressing the upper pinion toward the circular rack;
a support block connected to the first fixing block and the second fixing block and supporting the pressing block to be movable;
a pressure adjusting screw connected to the second fixing block, having an end portion connected to the pressing block, and pressing the pressing block; and
a dial gauge connected to the support block and measuring an absolute assembly distance between the circular rack and the upper pinion.

9. The power transmission apparatus of clam 8, wherein the upper pinion and the lower pinion are each a pin-geared pinion to which a plurality of pins are coupled to be rotatable in a circumferential direction of an outer circumferential surface, and a size of the lower pinion is greater than a size of the upper pinion, and
a plurality of pin grooves supporting some of the plurality of pins provided in the upper pinion are formed in an end portion of the pressing block.

10. The power transmission apparatus of clam 8, wherein a dowel pin coupling portion to which the origin fixing dowel pin of the pinion assembly distance adjuster is formed in the rack/pinion fixing plate.

11. The power transmission apparatus of clam 1, further comprising a motor mounting plate coupled to the rack/pinion fixing plate and forming a place where the motor is mounted while aligning concentricity of a shaft of the motor and the input shaft of the circular rack.

12. The power transmission apparatus of clam 1, further comprising a concentric alignment dowel pin connected to the motor mounting plate and the rack/pinion fixing plate and aligning concentricity of the motor mounting plate and input shaft of the circular rack.

13. A method of manufacturing a power transmission apparatus, the method comprising:
a pinion assembly distance adjuster origin setting operation of performing origin setting on a pinion assembly distance adjuster by using an origin setting jig;
a pinion assembly distance adjuster assembly operation of assembly the pinion assembly distance adjuster to a rack/pinion fixing plate to which a circular rack, a pair of upper pinions, and a pair of lower pinions are assembled to be movable; and
a circular rack and upper pinion absolute assembly distance measurement operation of measuring an absolute assembly distance between the circular rack and the pair of upper pinions by using the pinion assembly distance adjuster.

14. The method of claim 13, further comprising a power transmission apparatus assembly completion operation of completing assembly of the power transmission apparatus by assembling and fixing the circular rack, the pair of upper pinions and the pair of lower pinions to the rack/pinion fixing plate based on the absolute assembly distance between the circular rack and the pair of upper pinions that is measured and obtained, and by assembling the other parts thereto.

15. The method of claim 13, wherein, while fixed at a regular position on the rack/pinion fixing plate, the pinion assembly distance adjuster measures the absolute assembly distance between the circular rack and the upper pinion.

16. The method of claim 15, wherein, the pinion assembly distance adjuster comprises at least one origin fixing dowel pin that is coupled to a dowel pin coupling portion formed on the rack/pinion fixing plate, and
the pinion assembly distance adjuster assembly operation is performed while the origin fixing dowel pin of the pinion assembly distance adjuster is coupled to the dowel pin coupling portion of the rack/pinion fixing plate.

17. The method of claim 14, wherein, to perform the power transmission apparatus assembly completion operation,
a guide rail for position movements of the upper pinion and the lower pinion connected to each other and forming one body is formed in any one of a pinion transfer plate and the rack/pinion fixing plate, the pinion transfer plate being coupled between the upper pinion and the lower pinion that are coupled to each other and form one body, and a rail block moving on the guide rail is formed on the other one thereof

18. The method of claim 17, wherein, the guide rail is provided in a groove form in the rack/pinion fixing plate, and the rail block is provided in a protrusion form on the pinion transfer plate.

19. The method of claim 18, wherein, a circular rack assembly hole for assembly of the circular rack is formed in a central area of the rack/pinion fixing plate, and a pair of pinion assembly holes for assembly of the upper pinion and the lower pinion are formed in both sides of the circular rack assembly hole, and
the guide rail is formed in the rack/pinion fixing plate to communicate with the circular rack assembly hole and the pinion assembly holes.
